# FASCICULE DE BREVET EUROPEEN

(11) **EP 3 217 842 B1**
(45) Date de publication et mention de la délivrance du brevet: **07.11.2018**
(21) Numéro de dépôt: 15808715.5
(22) Date de dépôt: 12.11.2015
(51) Int. Cl.: A47B 91/00, B60B 33/06, B60B 33/08

(54) **MOBILIER COMPRENANT UN CORPS SUPPORTE PAR DES PIEDS**
MÖBELSTÜCK MIT EINEM KÖRPER MIT STÜTZBEINEN
PIECE OF FURNITURE COMPRISING A BODY SUPPORTED BY LEGS

(30) Priorité: 14.11.2014 FR 1460983
(43) Date de publication de la demande: 20.09.2017
(73) Titulaire: SMOW, 60510 Bresles (FR)
(72) Inventeur: NECER, Nadir, 60510 Bresles (FR)
(74) Mandataire: Bureau Duthoit Legros Associés
(86) Numéro de dépôt international: PCT/FR2015/053053
(87) Numéro de publication internationale: WO 2016/075412

(56) Documents cités:
- DE-C- 822 660
- GB-A- 2 417 892
- JP-A- 2008 125 990
- NL-C1- 1 017 036
- US-A- 1 016 324
- US-A1- 2012 091 299

## Description

L'invention concerne un mobilier tel qu'un établi. Le domaine de l'invention est celui des établis, à savoir un meuble massif sur lequel des opérateurs posent leurs matériaux afin de les travailler. Un établi comporte bien souvent un plateau massif, supporté par quatre pieds, bien souvent répartis aux quatre coins du plateau. Toutefois, l'invention n'est pas limitée à un établi, mais peut encore concerner d'autres mobiliers tels que tables, meubles de rangement ou similaires.
L'état de la technique de ce type de mobilier connait des établis, fixes, en appui sur ces quatre pieds, qui, en raison de leur poids, sont peu facilement déplaçables. Afin de permettre le transport de l'établi dans l'atelier, il est également connu des établis à roulettes, montées pivotantes. Une roulette comprend typiquement une petite roue articulée en pivot à une chape, suivant l'axe de rotation de la roue. Dans le cas d'une roulette pivotante, la chape est-elle même articulée à un support, suivant un axe de rotation perpendiculaire à l'axe de la roue et déporté par rapport à celui-ci afin de donner une orientation à la roue en fonction du sens de déplacement. Ces roulettes sont équipées de freins permettant de bloquer la position de l'établi lors du travail.
Selon les constatations de l'inventeur, ces établis à roulettes pivotantes présentent toutefois certains inconvénients, et en particulier :
- les roulettes, montées pivotantes ont l'inconvénient de nécessiter un effort important pour les faire changer d'orientation, notamment quand il est nécessaire de rebrousser chemin ou de partir d'une position à l'arrêt,
- les stationnements prolongés engendrent des plats sur les bandages de roulement des roulettes, notamment sous l'effet des charges stockées, provoquant ensuite une résistance au roulement,
- en fonction de leur orientation, certaines roulettes, saillantes latéralement, peuvent représenter un obstacle gênant, ou encore un risque de cogner les pieds,
- de tels établis à roulettes sont particulièrement instables, en particulier lorsqu'un effort important est transmis au plateau de l'établi.
L'état de la technique connaît toutefois des établis à roulettes escamotables qui permettent de résoudre le problème d'instabilité ci-dessus mentionné, ainsi que celui de la dégradation du bandage de roulement. Selon cette technique, les roulettes sont aptes à prendre une première position, dite de roulage, reprenant la charge de l'établi et permettant de rouler le mobilier au sol, vers une deuxième position dans laquelle les roulettes sont escamotées au-dessus des surfaces des pieds en appui sur le sol.
Un tel établi qui comporte des roulettes escamotables agencées de manière juxtaposée aux pieds du mobilier, présente toujours le problème de nécessiter un effort important lors des changements de direction.
En outre, et dans la position escamotée, les roulettes occupent un encombrement important entre les pieds du mobilier, ce qui est non seulement inesthétique, mais encore constitue une gêne, par exemple pour le balayage sous établi.
On connaît également du document US 2012/091299 A1, un ensemble de pied roulant pour un article, par exemple une table, comprenant une bille de roulement prévue pour être escamotée à l'intérieur du pied, lorsque le meuble est prévu pour rester à demeure, ou pour faire saillie à l'extérieur du pied, lorsque le meuble est prévu pour être déplacé, afin de faciliter le transport du meuble. Le déplacement et le maintien en position de ladite bille par rapport au pied se fait par l'intermédiaire de la rotation de différentes portions cylindriques du pied, mobiles l'une par rapport à l'autre et recevant ladite bille, lesdites portions cylindriques étant conformées de sorte à permettre le déplacement et le maintien en position de ladite bille par rapport au pied.
On connaît également du document GB 2 417 892 A un support pour un meuble, prévu pour être fixé au pied d'un meuble, comprenant un logement, un élément rotatif, telle qu'une bille, et un tube externe, vissé sur ledit logement. Le tube externe peut se déplacer d'une position à laquelle il s'étend au-delà de l'élément rotatif, et une position à laquelle ce n'est pas le cas.
On connaît également du document US 1 016 324 A un élément roulant, tel qu'une bille de roulement, prévu pour être employé notamment sur un pied de table, ledit élément roulant pouvant être abaissé afin de venir en contact avec le sol pour faciliter le déplacement dudit meuble, ou être relevé afin de pouvoir immobiliser le meuble sur le sol. Ledit élément roulant est prévu pour être reçu, en position relevée, dans un logement cylindrique fixé sur un pied du meuble, et pour se retrouver en saillie dudit logement cylindrique, en position abaissée. Des moyens d'arrêt sont prévus pour assurer l'immobilisation de l'élément roulant dans une position ou dans l'autre.
On connaît enfin du document JP 2008 125990 A une table basse comprenant des éléments roulants au niveau des pieds, d'un côté de ladite table basse. Les éléments roulants sont normalement rétractés et logés intégralement dans les jambes, mais sont prévus pour s'abaisser lorsque la table basse est inclinée avec le côté des éléments roulants relevés et pour revenir à leur position rétractée quand la table est de nouveau positionnée à l'horizontale. Un élément d'arrêt basculant, monté pivotant à l'intérieur de la jambe de la table est prévu à cet effet.

Le but de la présente invention est de pallier les inconvénients précités en proposant un mobilier qui est particulièrement stable lors du travail d'une part, et facilite le déplacement du mobilier lors du transport d'autre part.
D'autre buts et avantages de l'invention apparaitront au cours de la description qui va suivre qui n'est donnée qu'à titre indicatif et qui n'a pas pour but de la limiter.
L'invention concerne un mobilier comprenant un corps supporté par des pieds destinés à être en appui au sol, ainsi qu'un système de roulage escamotable comportant des éléments de roulage aptes à prendre une première position, dite de roulage, reprenant la charge du mobilier et permettant de rouler le mobilier au sol, vers une deuxième position, dite de travail, dans laquelle les éléments de roulage sont escamotés au-dessus des surfaces des pieds en appui sur le sol.
Selon une première alternative de l'invention, les pieds sont tubulaires et les éléments de roulage sont des systèmes à bille porteuse, aptes à se déplacer chacun de ladite deuxième position de travail dans laquelle chacun des systèmes à bille porteuse est reçu dans le volume intérieur de l'un des pieds tubulaires, vers la première position de roulage dans laquelle ledit système à bille porteuse fait saillie en dessous de la surface d'appui du pied par son embouchure inférieure.
Selon une deuxième alternative de l'invention, les pieds sont tubulaires et les éléments de roulage sont des systèmes à roue omnidirectionnelle, ladite roue omnidirectionnelle comprenant un moyeu, rotatif suivant un axe de rotation principale de la roue, ainsi qu'une pluralité de roulettes, réparties sur la circonférence du moyeu autour dudit axe de rotation principale, lesdites roulettes étant montées rotatives par rapport au moyeu suivant des axes de rotation secondaires, d'axes respectivement perpendiculaires à l'axe de rotation principale, les systèmes à roue omnidirectionnelle étant aptes à se déplacer chacun de ladite deuxième position de travail dans laquelle chacun des systèmes à roue omnidirectionnelle est reçu dans le volume intérieur de l'un des pieds tubulaires, vers la première position de roulage dans laquelle la roue omnidirectionnelle dudit système à roue omnidirectionnelle fait saillie en dessous de la surface d'appui du pied par son embouchure inférieure.
Selon une troisième alternative, les pieds sont tubulaires et les éléments de roulage sont des systèmes à galets, comprenant deux paires de galets, agencées à même niveau sur une platine, les axes des galets étant coplanaires de sorte que les galets des deux paires contactent simultanément le sol dans la position de roulage dudit élément de roulage, les deux galets de chaque paire étant d'axes parallèles, les axes des galets entre les deux paires étant perpendiculaires et de manière à permettre un déplacement suivant deux directions perpendiculaires : selon ce mode de réalisation la surface extérieure des galets peut être en téflon.
Selon l'invention, le mobilier comprend au moins un système de commande permettant le passage des éléments de roulage de la première position de roulage vers ladite deuxième position de travail, et inversement. Ledit système de commande comprend:
- au moins un dispositif de commande mécanique du type sauterelle à tige de poussée, comportant une semelle autour de laquelle est articulé un levier formant une première biellette, une deuxième biellette étant articulée à l'une de ses extrémités à la première biellette, et à son autre extrémité à ladite tige de poussée, montée coulissante au travers d'un alésage de ladite semelle,
- une tige de commande, interne à chaque pied tubulaire, libre de mouvement axialement au pied, dont l'extrémité supérieure est destinée à coopérer avec ledit dispositif de commande mécanique et dont l'extrémité inférieure est destinée à coopérer en appui avec un siège pour le système de bille porteuse, avec une chape de la roue omnidirectionnelle du système à roue omnidirectionnelle, ou encore avec le système de galet,
et de telle façon que l'actionnement du levier en direction de la semelle provoque l'actionnement de la tige de commande vers le bas, et ainsi le déplacement de la bille, de la roue omnidirectionnelle, ou des galets de la deuxième position de travail vers la première position de roulage, jusqu'au blocage de la position.
Selon des caractéristiques optionnelles de l'invention, prises seules ou en combinaison :
- le système de commande comprend, pour chaque pied tubulaire, ledit dispositif de commande mécanique du type sauterelle à tige de poussée, ladite tige de poussée du dispositif mécanique étant située dans l'axe de ladite tige de commande, destinée à engager en appui avec l'extrémité supérieure de ladite tige de commande ;
- un ressort de compression est prévu entre l'extrémité supérieure de la tige de commande et la tige de poussée du dispositif de commande, de raideur tel que le ressort permet, dans ladite position escamotée de la bille ou alternativement de la roue omnidirectionnelle ou encore du système à galets, la transmission d'un effort, depuis ladite bille du système à bille porteuse ou encore depuis la roue omnidirectionnelle du système à roue omnidirectionnelle, ou encore du système à galets, en faible appui sur le sol, logé dans le pied tubulaire par l'intermédiaire de la tige de commande et ladite tige de poussée et de façon à maintenir le levier du dispositif de commande mécanique, dans une position complètement écartée de la semelle ;
- un manchon intercalaire en élastomère est prévu entre la tige de commande et les parois intérieures de chaque pied tubulaire, un tel manchon permettant avantageusement de diminuer les bruits provoqués par les vibrations lors du roulage ;
- le corps est un plateau ;
- les pieds tubulaires, comprenant un système de réglage de la hauteur, chaque pied comprenant une première partie, solidaire du corps et une deuxième partie, de position réglage par rapport à ladite première partie.

Alternativement, selon un mode de réalisation, le système de commande comprend un seul dispositif de commande mécanique du type sauterelle à tige de poussée pour une paire de pieds tubulaires, ladite tige de poussée actionnant un système de coins coopérant avec les extrémités des deux tiges de commande associées à ladite paire de pieds.

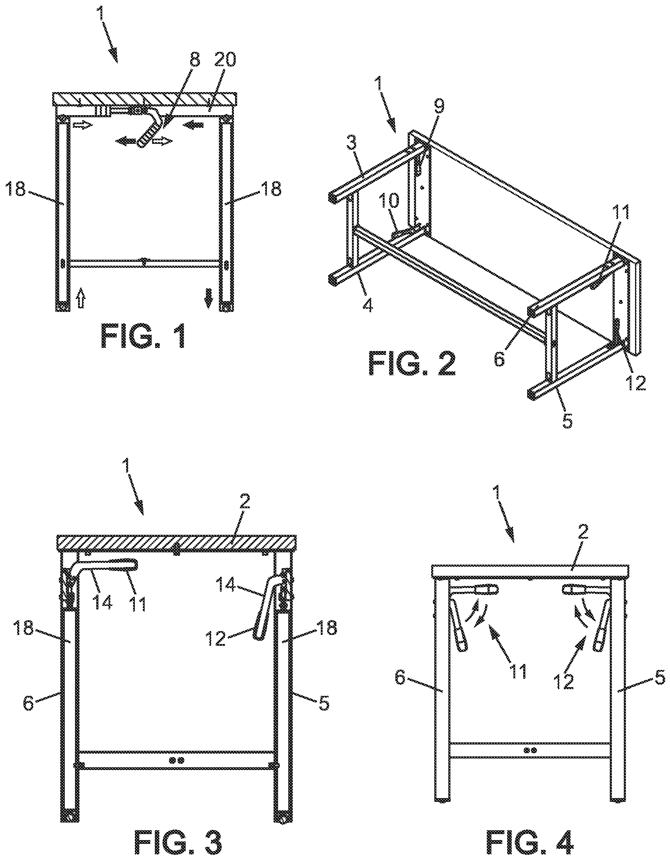

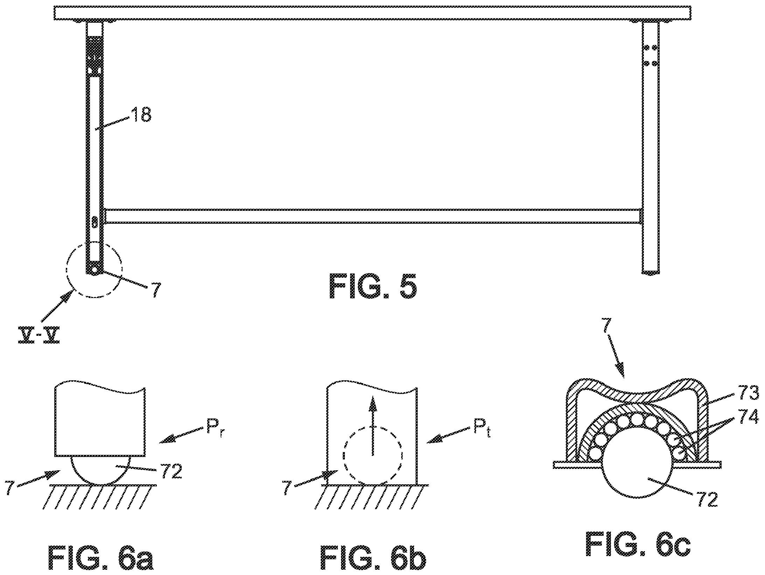

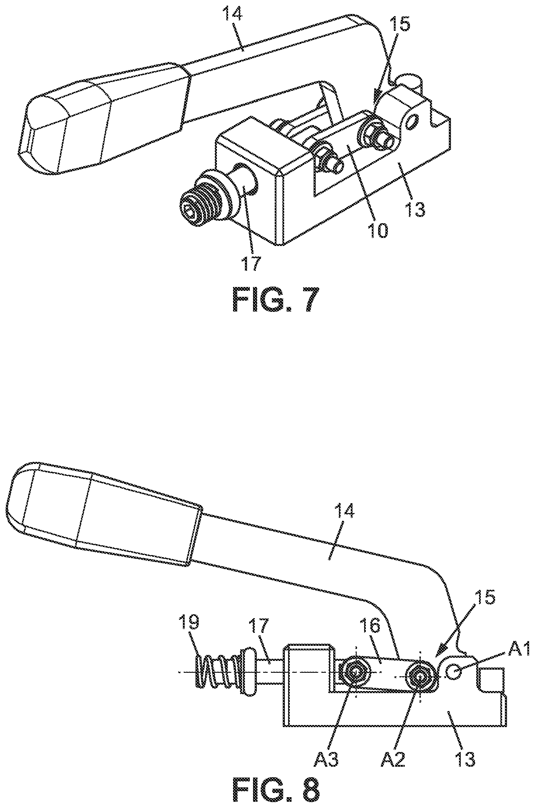

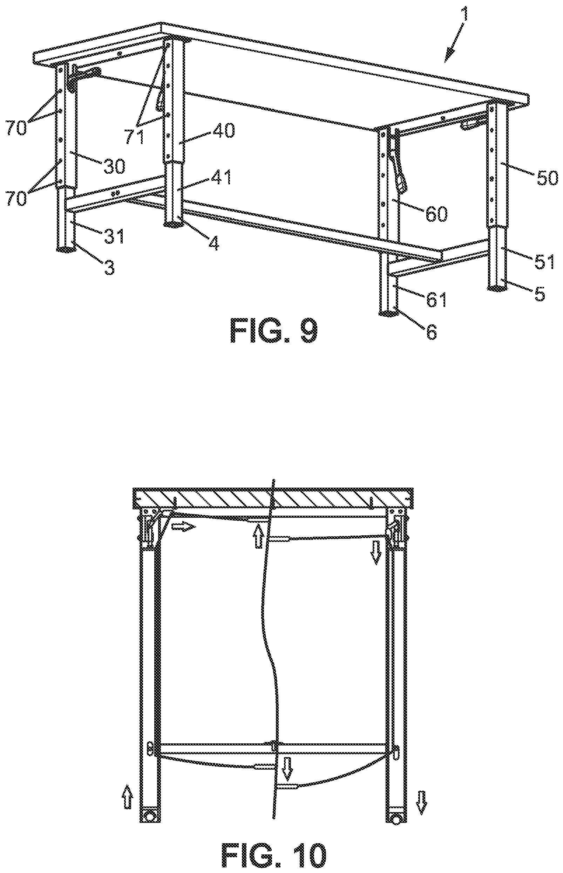

L'invention sera mieux comprise à la lecture de la description suivante accompagnée des dessins en annexe parmi lesquels :
- La figure 1 est une vue schématique de côté d'un établi, conforme à l'invention selon un mode de réalisation, et dont les deux billes escamotables d'une paire de pieds sont actionnées de leur position escamotée vers leur position de roulage, par un même dispositif de commande du type sauterelle,
- La figure 2 est une vue schématique en perspective d'un établi (couché), conforme à l'invention selon un second mode de réalisation, et dont chaque pied est équipé d'un dispositif de commande mécanique,
- La figure 3 est une vue de côté de l'établi de la figure 2, le levier du dispositif de commande (à gauche) étant déverrouillé, autorisant la rentrée de la bille dans le pied correspondant, le levier du dispositif de commande (à droite) étant verrouillé contre la semelle, provoquant la sortie de la bille,
- La figure 4 est une vue de côté illustrant les deux positions extrêmes des leviers,
- La figure 5 est une vue de face de l'établi, le pied gauche illustré en transparence,
- La figure 6a est une vue de détail du cadre V-V tel qu'illustré à la figure 5, la bille en position de roulage et la figure 6b un telle vue de détail, la bille en position escamotée,
- La figure 6c est une vue d'un exemple de réalisation d'un système à bille porteuse, qui comprend une bille destinée à rouler au sol, et des billes secondaires, de plus petit diamètre, permettant un roulement entre ladite bille et un ensemble support du système.
- La figure 7 est une vue de perspective d'un dispositif de commande mécanique du type sauterelle,
- La figure 8 est une vue de côté du dispositif de la figure 7,
- La figure 9 est une vue d'un établi conforme à l'invention selon un mode de réalisation présentant un système de réglage de la hauteur.
- La figure 10 représente un troisième mode de réalisation de l'invention, équipé d'un système d'actionnement au pied,
- La figure 11 est une vue de côté d'un exemple de système à roue omnidirectionnelle, selon une deuxième alternative de l'élément de roulage selon l'invention, et qui peut être utilisé comme alternative aux systèmes à bille porteuse,
- La figure 12 est une vue de dessus de la roue omnidirectionnelle telle qu'illustrée à la figure 11,
- La figure 13 est une vue de côté d'un exemple de platine comprenant deux paires de galets , selon une troisième alternative de l'élément de roulage selon l'invention, les deux paires de galets étant agencés sur la platine à un même niveau de hauteur, et de sorte que les galets des deux paires contactent simultanément le sol dans la position de roulage dudit élément, les deux paires de galets étant agencés de manière à permettre respectivement un déplacement suivant deux directions différentes, et de préférence deux directions perpendiculaires,
- La figure 14 est une vue de dessous de la figure 13.
Aussi, l'invention concerne un mobilier 1 comprenant un corps 2 supporté par des pieds 3,4,5,6 destinés à être en appui au sol, ainsi qu'un système de roulage escamotable. Ce système de roulage comporte des éléments de roulage 7 aptes à prendre une première position Pr, dite de roulage, au-dessous de la surface d'appui des pieds, reprenant la charge du mobilier et permettant de rouler le mobilier au sol, vers une deuxième position Pt, dite de travail, dans laquelle les éléments de roulage sont escamotés au-dessus des surfaces des pieds en appui sur le sol.
Selon une première alternative de l'invention, les pieds 3, 4, 5, 6 sont tubulaires et les éléments de roulage 7 sont des systèmes à bille porteuse, aptes à se déplacer chacun de ladite deuxième position de travail Pt dans laquelle chacun des systèmes à bille porteuse est reçu dans le volume intérieur de l'un des pieds tubulaires, vers la première position de roulage Pr dans laquelle la bille 72 dudit système à bille porteuse fait saillie en dessous de la surface d'appui du pied par son embouchure inférieure.
Un système à bille porteuse est connu en tant que tel dans le domaine de la manutention appelé « *bille porteuse* » ou encore « *bille de transfert* » et illustré à titre d'exemple non limitatif à la figure 6c. Un tel système à bille porteuse comprend une bille 72 destinée à rouler au sol, un ensemble support 73 formant une cage pour la bille 72, ainsi que des billes secondaires 74, de plus petites diamètres, permettant le roulement de la bille 72 par rapport à l'ensemble support 73.
Avantageusement, dans la deuxième position de travail Pt, telle qu'illustrée schématiquement à la figure 6b, chacun des systèmes à bille porteuse est reçu dans le volume intérieur du pied. Avantageusement, et dans la deuxième position de travail Pt les éléments de roulage (c'est-à-dire les systèmes à bille porteuse) sont cachés dans les pieds du mobilier et ne constituent pas un obstacle supplémentaire sous et autour du mobilier, en particulier autour des pieds du mobilier.
Dans la première position de roulage Pr, les billes 72 des systèmes à bille porteuse font saillie de pieds 3, 4, 5, 6 et permettent de rouler le mobilier au sol, dans n'importe quelle direction, en facilitant les changements de directions, grâce aux billes 72 sphériques.
Selon un mode de réalisation, le mobilier comprend au moins un système de commande (par exemple à vérin, de type sauterelle...) permettant le passage des éléments de roulage 7 de la première position de roulage Pr vers ladite deuxième position de travail Pt, et inversement. Le système de commande peut être à commande manuelle (mode de réalisation illustré), ou encore à commande au pied. Il peut encore s'agir d'une commande assistée par un actionneur (par exemple, un vérin électrique, pneumatique ou autre).
Selon un mode de réalisation, le système de commande comprend:
- au moins un dispositif 8 ;9,10,11,12 de commande mécanique du type sauterelle à tige de poussée, comportant une semelle 13 autour de laquelle est articulé un levier 14, à fonction de poignée, formant une première biellette 15, une deuxième biellette 16 étant articulée à l'une de ses extrémités à la première biellette 15, et à son autre extrémité à ladite tige de poussée 17, monté coulissante au travers d'un alésage de ladite semelle 13.
- une tige de commande 18, interne à chaque pied tubulaire 3,4,5,6, libre de mouvement axialement au pied, dont l'extrémité supérieure est destinée à coopérer avec ledit dispositif de commande mécanique 8 ;9,10,11,12 et dont l'extrémité inférieure est destinée à coopérer en appui avec un siège pour le système à bille porteuse.
L'actionnement du levier 14 en direction de la semelle 13 provoque l'actionnement de la tige de commande 18 vers le bas, et ainsi le déplacement du système à bille porteuse de la deuxième position de travail Pt vers la première position de roulage Pr, jusqu'au blocage de la position.
Le dispositif de commande mécanique du type à sauterelle est illustré, selon un mode de réalisation non limitatif, aux figures 7 et 8. Il comprend la semelle 13 sur lequel est articulé en pivot le levier 14 suivant un premier axe d'articulation A1 entre la semelle 13 et le levier 14. Ce levier forme une première biellette 15, grâce à un deuxième axe d'articulation A2 entre le levier 14 (formant la première biellette 15) et la deuxième biellette 16. La deuxième biellette 16 est articulée, selon un troisième axe d'articulation A3 entre la tige de poussée 17 et la deuxième biellette 16.
Les deux biellettes 15 et 16 forment une genouillère qui permet d'exercer un effort de poussée sur la tige 17 lorsque le levier 14 est pivoté en direction de la semelle 13, avec effet de démultiplication de force. Le blocage est effectif une fois que la deuxième articulation A2 entre les deux biellettes 15,16 passe l'alignement entre la première et la troisième articulation, repérées respectivement A1 et A3 et vient en butée contre la semelle 13.
Un tel dispositif de commande mécanique peut, tel qu'illustré non limitativement à la figure 1, être utilisé pour commander les éléments de roulage d'une paire de pieds du mobilier. Le système de commande comprend alors un seul dispositif 8 de commande mécanique pour actionner les éléments de roulage de la paire. La tige de poussée 17 actionne un système à coins 20 coopérant avec les extrémités supérieures des deux tiges de commande 18. Selon ce mode de réalisation, le dispositif de commande mécanique 8 permet d'entraîner au coulissement le système de coins 20. Lorsque le dispositif est actionné au verrouillage, la tige de poussée 17 du dispositif commande en translation les coins, qui, à leur tour, contraignent les tiges de commande 18 vers le bas, et ainsi les billes 72 des systèmes à bille porteuse à sortir dans la première position de roulage Pr.
Selon un autre mode de réalisation, illustré non limitativement des figures 2 à 4, le système de commande comprend, pour chaque pied tubulaire 3,4,5,6, ledit dispositif 9,10,11,12 de commande mécanique du type sauterelle à tige de poussée. Selon un mode de réalisation, ladite tige de poussée 17 du dispositif mécanique est située dans l'axe de ladite tige de commande 18, destinée à engager en appui avec l'extrémité supérieure de ladite tige de commande 18.
Selon ce mode de réalisation, lorsque le dispositif est actionné au verrouillage, la tige de poussée 17 appuie sur l'extrémité supérieure de la tige de commande 18, contraignant la tige de commande 18 vers le bas, et ainsi la bille à sortir. Lorsque le levier 14 est actionné en sens inverse, le poids du mobilier contraint la bille à rentrer dans le pied, et ainsi la tige de commande 18 vers le haut, et de fait le levier 14, dans une position écartée de la semelle 13.
Selon un mode de réalisation avantageux, un ressort de compression 19 peut être prévu entre l'extrémité supérieure de la tige de commande 18 et la tige de poussée 17 du dispositif de commande. La raideur tel que le ressort permet, dans ladite position escamotée de la bille, la transmission d'un effort, depuis ladite bille 72 du système à bille porteuse en faible appui sur le sol, logé dans les pieds tubulaires 3,4,5,6, par l'intermédiaire de la tige de commande 18 et ladite tige de poussée 17 et de façon à maintenir le levier 14 du dispositif de commande mécanique, dans une position complètement écartée de la semelle 13.
On entend par « faible » appui de la bille 72 le fait que la force exercée par le ressort sur le système à bille porteuse est insuffisante pour soulever le meuble qui reste principalement en appui au sol par les surfaces inférieures des pieds.
La fonction de ce ressort de compression est de pouvoir, dans la deuxième position de travail Pt, maintenir le levier 14 dans une position complètement écartée par rapport à la semelle 13, et par exemple une position sensiblement horizontale, notamment juste en dessous du plateau de mobilier (voir figure 4). La raideur du ressort est telle que dans la position de travail, le ressort de compression, en appui sur la tige de commande contraint le levier 14 dans une position complément écartée de la semelle. Un tel ressort permet ainsi un fonctionnement et un aspect homogène des dispositifs de commande, et quel que soit les irrégularités au sol. A l'inverse, et dans la position de roulage, le ressort de compression 19 permet de maintenir un effort sur le dispositif de commande mécanique de type sauterelle, même lorsque la bille 72 du système à bille porteuse rencontre un creux dans le sol. On évite ainsi que les trépidations provoquées par un roulage sur un sol irrégulier ne provoquent un déverrouillage intempestif du dispositif de commande mécanique.
Un manchon intercalaire en élastomère entre la tige de commande 18 et les parois intérieures de chaque pied tubulaire 3,4,5,6 peut être prévu afin de limiter les bruits. Selon un mode de réalisation, le mobilier peut être un établi qui comprend un plateau et des pieds par exemple au nombre de quatre.
Selon un mode de réalisation, le mobilier peut être de hauteur réglable. A cet effet, les pieds tubulaires 3,4,5,6 peuvent comprendre un système de réglage de la hauteur, chaque pied comprenant une première partie 30,40,50,60, solidaire du corps 2 et une deuxième partie 31,41,51,61, de position réglable par rapport à ladite première partie (suivant l'axe du pied). Le système de roulage escamotable est alors de préférence embarqué sur la deuxième partie des pieds.
Selon un mode de réalisation, un tel système permet le réglage de la hauteur en plusieurs positions discrètes, la première partie (resp. la deuxième partie) pouvant présenter une pluralité d'ouvertures de réglage 70, l'autre partie, à savoir la deuxième partie (resp. la première partie) présentant au moins une ouverture correspondante.
Le réglage est effectué en modifiant la position relative de la deuxième partie par rapport à la première partie jusqu'à une mise en regard de l'une des ouvertures de réglage de la première partie avec l'ouverture de la deuxième partie la plus adaptée au réglage, puis l'insertion d'un organe de fixation 71 au travers des ouvertures en regard appartenant aux deux parties, et afin de verrouiller la position.
Eventuellement, tel qu'illustré à la figure 10, le mobilier peut comprendre un système de tringlerie (ou de câble) relié aux deux leviers 14 de deux des dispositifs de commande de type sauterelle, et synchronisant l'actionnement des dispositifs de commande. Le système peut être actionnable au pied et/ou à la main pour passer de la première position de roulage Pr vers la deuxième position de travail Pt (illustrée à gauche sur la figure 10), ou inversement (tel qu'illustrée à droite sur la figure 10).

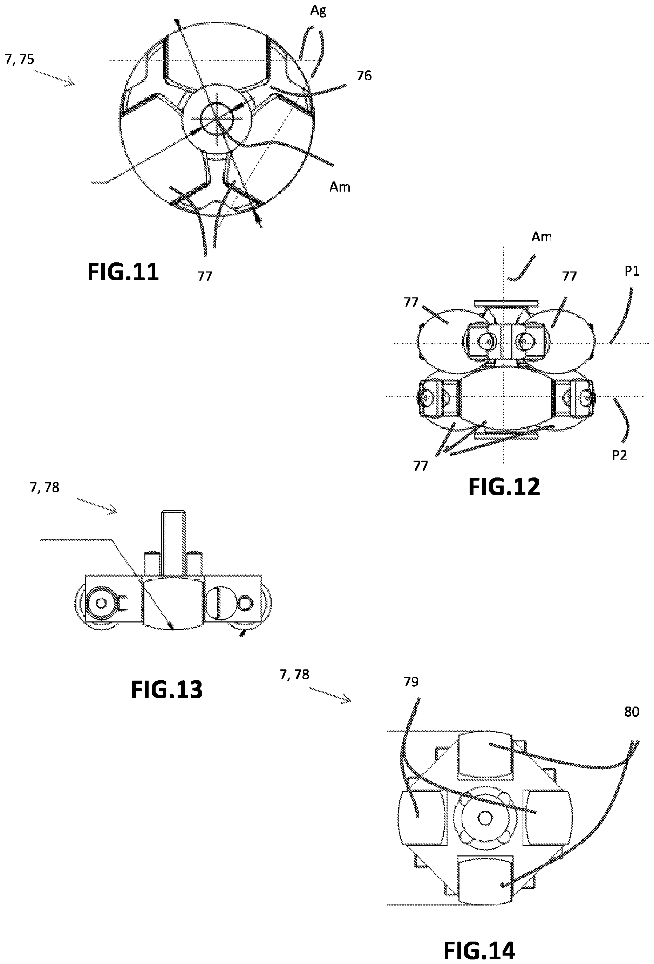

Selon une deuxième alternative de l'invention, les éléments de roulage à savoir les systèmes à bille porteuse des différents modes de réalisation précédemment décrits peuvent être remplacés par des systèmes à roue omnidirectionnelle. Les diverses variantes des systèmes de commande précédemment décrits restent compatibles lorsque l'élément de roulage est un système à roue omnidirectionnelle.
Dans la première position de roulage, les roues omnidirectionnelles, à l'instar des billes 72 des systèmes à bille porteuse, font saillie de pieds du mobilier et permettent de rouler le mobilier au sol, dans n'importe quelle direction, en facilitant les changements de direction, grâce aux roues omnidirectionnelles. Un avantage supplémentaire d'une roue omnidirectionnelle par comparaison à la bille du système à bille porteuse est que la surface de contact au sol de la roue omnidirectionnelle est supérieure à celle de la bille, limitant les risques de marquage au sol.
Une roue omnidirectionnelle est connue en soi, dans le domaine de la mécanique générale par exemple, du document US 1.305.585, ou encore du document US 3.789.947.
Une roue omnidirectionnelle 75 comprend, tel qu'illustré à titre d'exemple non limitatif à la figure 11, un moyeu 76, rotatif suivant un axe de rotation principale Am de la roue, ainsi qu'une pluralité de galets 77 destinés à être en contact avec le sol, répartis sur la circonférence du moyeu autour dudit axe de rotation principale, lesdits galets 77 étant montés rotatifs par rapport au moyeu 76 suivant des axes de rotation secondaires, de préférence d'axes respectivement perpendiculaires à l'axe de rotation principale, chacun sensiblement tangentiel sur la périphérie.
L'axe de rotation principale Am autorise un déplacement au sol suivant une première direction, alors que chacun des axes de rotation secondaires Ag autorise un déplacement au sol suivant une deuxième direction, non parallèle à la première direction, et de préférence sensiblement perpendiculaire à la première direction. La rotation suivant l'axe de rotation principale et la rotation suivant l'un des axes de rotation secondaire peuvent être combinées pour autoriser un déplacement au sol dans n'importe quelle direction.
La roue omnidirectionnelle 75 peut comprendre une première série de galets 77 d'axes secondaire de rotation Ag contenus dans un premier plan P1 perpendiculaire à l'axe de rotation principale Am, ainsi qu'une deuxième de série de galets d'axes secondaires de rotation Ag contenus dans un deuxième plan P2 perpendiculaire à l'axe de rotation principale Am, mais décalé par rapport au premier plan. Les galets de la première série et de la deuxième série sont alors disposés de préférence en quinconce sur la périphérie de la roue et afin que la roue omnidirectionnelle soit toujours en appui au sol par l'intermédiaire d'un galet de la première série ou de la deuxième série : on favorise le recouvrement entre les galets sur la périphérie de la roue.
Selon un mode de réalisation, les galets peuvent comprendre un corps en plastique dur ou en métal, et un revêtement élastomère. Ce revêtement élastomère permet de limiter plus encore le marquage du sol, et atténue le bruit de roulage.

Selon une troisième alternative de l'invention, les éléments de roulage à savoir les systèmes à bille porteuse des différents modes de réalisation précédemment décrits peuvent être remplacés par des systèmes à galets tels que décrits par la suite. Les diverses variantes des systèmes de commande précédemment décrits restent compatibles lorsque l'élément de roulage est un tel système à galets.

De tels systèmes à galets78, comprennent deux paires de galets 79, 80, agencées à même niveau sur une platine, les axes des galets étant coplanaires de sorte que les galets des deux paires 79,80 contactent simultanément le sol dans la position de roulage Pr dudit élément de roulage 7.

Selon cette alternative illustrée à titre d'exemple non limitatif, les deux galets de chaque paire 79,80 sont d'axes parallèles, les axes des galets entre les deux paires 79, 80 étant perpendiculaires et de manière à permettre un déplacement suivant deux directions perpendiculaires. Les galets des deux paires peuvent être supportés par une même platine, suivant quatre axes de rotation, deux à deux perpendiculaires. Ainsi les deux galets de la paire 79 assurent le déplacement au sol par roulage suivant une première direction, les deux galets de l'autre paire 80 glissant au sol lors de cette action. Les deux galets de la paire 80 assurent le placement au sol par roulage suivant une deuxième direction, perpendiculaire à la première direction, les deux galets de l'autre paire 79 glissant au sol lors de cette action.
Une telle solution d'élément de roulage est donc particulièrement destinée pour des sols tels que des moquettes offrant peu de résistance au glissement des galets lorsque ces derniers sont utilisés comme patins.

Afin de favoriser le glissement des galets de la paire 79 ou 80 sollicitées au glissement (lorsque les autres galets sont sollicités au roulage), les dispositions suivantes peuvent être prises
- les galets sont de préférence en téflon ou un autre matériau à faible coefficient de frottement, au moins au niveau de la surface de roulage,
- les galets ne sont pas cylindriques, mais sont des corps de révolution à surface extérieure lisse, favorisant le glissant suivant l'axe du galet, et se caractérisant par un diamètre maximale, au niveau d'une zone intermédiaire du galet, et des extrémités de plus petits diamètres : l'effet ici recherche est que le galet se comporte comme un patin lorsque déplacé suivant son axe : la forme d'un galet se rapproche ainsi de la forme d'une olive.
Selon une variante non revendiquée, les éléments de roulage à savoir les systèmes à bille porteuse des différents modes de réalisation précédemment décrits peuvent être remplacés par des roulettes telles que connue de l'état de la technique. Les diverses variantes des systèmes de commande précédemment décrits restent compatibles lorsque l'élément de roulage est une roulette.
Naturellement, d'autres modes de réalisations auraient pu être envisagés sans pour autant sortir du cadre de l'invention tel que défini par les revendications ci-après.

### NOMENCLATURE

1. Mobilier,
2. Corps,
3, 4, 5, 6. Pieds,
7. Elément de roulage (systèmes à bille porteuse ou à roue omnidirectionnelle),
8, 9, 10, 11, 12. Dispositif de commande mécanique de type sauterelle,
13. Semelle,
14. Levier,
15. Première biellette,
16. Deuxième biellette,
17. Tige de poussée,
18. Tige de commande,
19. Ressort de compression,
20. Système de coins (Mode de réalisation de la figure 1),
30, 40, 50, 60. Premières parties des pieds,
31, 41, 51, 61. Deuxièmes parties des pieds,
70. Ouvertures de réglage,
71. Organe de fixation (par exemple vis/écrou)
72. Bille (principale) destinée à rouler au sol du système à bille porteuse (Elément de roulage 7),
73. Ensemble support formant une cage pour la bille principale,
74. Billes (secondaires) destinées à permettre le roulement de la bille principale par rapport à l'ensemble support
75. Roue omnidirectionnelle,
76. Moyeu,
77. Galets,
78. Systèmes à galets,
79. Paire de galets (première)
80. Paire de galets (deuxième)
A1. Axe articulation entre le levier 14 (première biellette 15) et la semelle 13.
A2. Axe d'articulation entre le deuxième levier 16 et la première biellette 15 (levier 14).
A3 Axe d'articulation entre le deuxième levier 16 et la tige de poussée 17,
Am. Axe de rotation principale,
Ag. Axes de rotation secondaires,
Pr. Première position, dite de roulage,
Pt. Deuxième position, dite de travail

## Revendications

1. Mobilier (1) comprenant un corps (2) supporté par des pieds (3,4,5,6) destinés à être en appui au sol, ainsi qu'un système de roulage escamotable comportant des éléments de roulage (7) aptes à prendre une première position (Pr), dite de roulage, reprenant la charge du mobilier et permettant de rouler le mobilier au sol, vers une deuxième position (Pt), dite de travail, dans laquelle les éléments de roulage sont escamotés au-dessus des surfaces des pieds en appui sur le sol, dans lequel les pieds (3, 4, 5, 6) sont tubulaires et en ce que les éléments de roulage (7) sont :
- des systèmes à bille porteuse, aptes à se déplacer chacun de ladite deuxième position de travail (Pt) dans laquelle chacun des systèmes à bille porteuse est reçu dans le volume intérieur de l'un des pieds tubulaires, vers la première position de roulage (Pr) dans laquelle la bille (72) dudit système à bille porteuse fait saillie en dessous de la surface d'appui du pied par son embouchure inférieure, ou alternativement,
- des systèmes à roue omnidirectionnelle, ladite roue omnidirectionnelle (75) comprenant un moyeu (76), rotatif suivant un axe de rotation principale (Am) de la roue, ainsi qu'une pluralité de galets,(77) répartis sur la circonférence du moyeu autour dudit axe de rotation principale, lesdits galets (77) étant montés rotatifs par rapport au moyeu (76) suivant des axes de rotation secondaires, de préférence d'axes respectivement perpendiculaires à l'axe de rotation principale, les systèmes à roue omnidirectionnelle étant aptes à se déplacer chacun de ladite deuxième position de travail (Pt) dans laquelle chacun des systèmes à roue omnidirectionnelle est reçu dans le volume intérieur de l'un des pieds tubulaires, vers la première position de roulage (Pr) dans laquelle la roue omnidirectionnelle dudit système à roue omnidirectionnelle fait saillie en dessous de la surface d'appui du pied par son embouchure inférieure, ou alternativement
- des systèmes à galets (78), comprenant deux paires de galets (79, 80), agencées à même niveau sur une platine, les axes des galets étant coplanaires de sorte que les galets des deux paires (79,80) contactent simultanément le sol dans la position de roulage (Pr) dudit élément de roulage (7), les deux galets de chaque paire (79,80) étant d'axes parallèles, les axes des galets entre les deux paires étant perpendiculaires et de manière à permettre un déplacement suivant deux directions perpendiculaires, ledit mobilier comprenant au moins un système de commande permettant le passage des éléments de roulage de la première position de roulage (Pr) vers ladite deuxième position de travail (Pt), et inversement,
**caractérisé en ce que** le système de commande comprend:
- au moins un dispositif (8 ;9,10,11,12) de commande mécanique du type sauterelle à tige de poussée, comportant une semelle (13) autour de laquelle est articulé un levier (14) formant une première biellette (15), une deuxième biellette (16) étant articulée à l'une de ses extrémités à la première biellette (15), et à son autre extrémité à ladite tige de poussée (17), montée coulissante au travers d'un alésage de ladite semelle (13).
- une tige de commande (18), interne à chaque pied tubulaire (3,4,5,6), libre de mouvement axialement au pied, dont l'extrémité supérieure est destinée à coopérer avec ledit dispositif de commande mécanique (8 ;9,10,11,12) et dont l'extrémité inférieure est destinée à coopérer en appui avec un siège pour la bille du système à bille porteuse, avec une chape de la roue omnidirectionnelle du système à roue omnidirectionnelle, ou encore avec le système de galet,
et de telle façon que l'actionnement du levier (14) en direction de la semelle (13) provoque l'actionnement de la tige de commande (18) vers le bas, et ainsi le déplacement de la bille, de la roue omnidirectionnelle, ou des galets de la deuxième position de travail (Pt) vers la première position de roulage (Pr), jusqu'au blocage de la position.

2. Mobilier selon la revendication 1, dans lequel les éléments de roulage sont lesdits systèmes à roue omnidirectionnelle.

3. Mobilier selon la revendication 1, dans lequel les éléments de roulage sont lesdits systèmes à galets.

4. Mobilier selon la revendication 3, dans lequel les galets sont en téflon, au moins au niveau de la surface de roulage.

5. Mobilier selon la revendication 1, dans lequel les éléments de roulage sont lesdits systèmes à bille porteuse.

6. Mobilier selon l'une des revendications 1 à 5, dans lequel le système de commande comprend, pour chaque pied tubulaire (3,4,5,6), ledit dispositif (9,10,11,12) de commande mécanique du type sauterelle à tige de poussée, ladite tige de poussée (17) du dispositif mécanique étant située dans l'axe de ladite tige de commande (18), destinée à engager en appui avec l'extrémité supérieure de ladite tige de commande (18).

7. Mobilier selon l'une des revendications 1 à 6, dans lequel un ressort de compression (19) est prévu entre l'extrémité supérieure de la tige de commande (18) et la tige de poussée (17) du dispositif de commande, de raideur tel que le ressort permet, dans ladite position escamotée de la bille ou alternativement de la roue omnidirectionnelle ou encore du système à galets, la transmission d'un effort, depuis la bille (72) dudit système à bille porteuse ou encore depuis la roue omnidirectionnelle du système à roue omnidirectionnelle, ou encore du système à galets en faible appui sur le sol, logé dans le pied tubulaire (3,4,5,6), par l'intermédiaire de la tige de commande (18) et ladite tige de poussée (17) et de façon à maintenir le levier (14) du dispositif de commande mécanique, dans une position complètement écartée de la semelle (13).

8. Mobilier selon l'une des revendications 1 à 7, dans lequel le système de commande comprend un seul dispositif (8) de commande mécanique du type sauterelle à tige de poussée pour une paire de pieds tubulaires, ladite tige de poussée actionnant un système de coins (20) coopérant avec les extrémités des deux tiges de commande (18) associées à ladite paire de pieds.

9. Mobilier selon l'une des revendications 1 à 8 présentant un manchon intercalaire en élastomère entre la tige de commande (18) et les parois intérieures de chaque pied tubulaire (3,4,5,6),

10. Mobilier selon l'une des revendications 1 à 9, dans lequel le corps (2) est un plateau.

11. Mobilier selon l'une des revendications 1 à 10, dans lequel les pieds tubulaires (3,4,5,6), comprennent un système de réglage de la hauteur, chaque pied comprenant une première partie (30,40,50,60), solidaire du corps (2) et une deuxième partie (31,41,51,61), de position réglable par rapport à ladite première partie.

12. Utilisation du mobilier selon l'une des revendications 1 à 11 comme établi.

## Patentansprüche

1. Möbelstück (1), welches einen Körper (2) umfasst, der von Beinen (3, 4, 5, 6) getragen wird, die dazu bestimmt sind, sich auf dem Boden abzustützen, sowie ein einziehbares Rollsystem, das Rollelemente (7) aufweist, die geeignet sind, eine erste Position (Pr) einzunehmen, Rollposition genannt, wobei sie die Last des Möbelstücks aufnehmen und ermöglichen, das Möbelstück auf dem Boden zu rollen, und eine zweite Position (Pt), Arbeitsposition genannt, in welcher die Rollelemente bis oberhalb der sich auf dem Boden abstützenden Flächen der Beine eingezogen sind, wobei die Beine (3, 4, 5, 6) rohrförmig sind, und dadurch, dass die Rollelemente (7) sind:
- Tragkugelsysteme, die geeignet sind, sich jeweils aus der die Arbeitsposition (Pt) darstellenden zweiten Position, in welcher jedes der Tragkugelsysteme im Innenvolumen eines der rohrförmigen Beine aufgenommen ist, in die die Rollposition (Pr) darstellende erste Position zu verlagern, in welcher die Kugel (72) des Tragkugelsystems unterhalb der Stützfläche des Beins aus deren unterer Öffnung vorsteht, oder, alternativ dazu,
- Systeme mit omnidirektionalem Rad, wobei das omnidirektionale Rad (75) eine Nabe (76), die um eine Hauptdrehachse (Am) des Rades drehbar ist, sowie mehrere Rollen (77), die auf dem Umfang der Nabe um die Hauptdrehachse herum verteilt sind, umfasst, wobei die Rollen (77) bezüglich der Nabe (76) um sekundäre Drehachsen drehbar gelagert sind, deren Achsen vorzugsweise jeweils zur Hauptdrehachse senkrecht sind, wobei die Systeme mit omnidirektionalem Rad geeignet sind, sich jeweils aus der die Arbeitsposition (Pt) darstellenden zweiten Position, in welcher jedes der Systeme mit omnidirektionalem Rad im Innenvolumen eines der rohrförmigen Beine aufgenommen ist, in die die Rollposition (Pr) darstellende erste Position zu verlagern, in welcher das omnidirektionale Rad des Systems mit omnidirektionalem Rad unterhalb der Stützfläche des Beins aus deren unterer Öffnung vorsteht, oder, alternativ dazu,
- Rollensysteme (78), die zwei Paare von Rollen (79, 80) umfassen, die auf derselben Höhe auf einer Platte angeordnet sind, wobei die Achsen der Rollen koplanar sind, derart, dass die Rollen der zwei Paare (79, 80) in der Rollposition (Pr) des Rollelements (7) gleichzeitig mit dem Boden in Kontakt kommen, wobei die zwei Rollen jedes Paares (79, 80) parallele Achsen aufweisen, wobei die Achsen der Rollen des einen Paares senkrecht zu denen des anderen sind, und derart, dass eine Verschiebung in zwei zueinander senkrechten Richtungen ermöglicht wird,
wobei das Möbelstück wenigstens ein Steuerungssystem umfasst, das den Übergang der Rollelemente aus der die Rollposition (Pr) darstellenden ersten Position in die die Arbeitsposition (Pt) darstellende zweite Position und umgekehrt ermöglicht,
**dadurch gekennzeichnet, dass** das Steuerungssystem umfasst:
- wenigstens eine mechanische Steuerungsvorrichtung (8; 9, 10, 11, 12) vom Typ eines Schubstangenspanners, die eine Sohle (13) aufweist, um die herum ein Hebel (14) angelenkt ist, der eine erste Verbindungsstange (15) bildet, wobei eine zweite Verbindungsstange (16) an einem ihrer Enden an der ersten Verbindungsstange (15) angelenkt ist und an ihrem anderen Ende an der Schubstange (17), die durch eine Bohrung der Sohle (13) hindurch gleitend gelagert ist,
- eine Steuerstange (18) im Inneren jedes rohrförmigen Beins (3, 4, 5, 6), die axial bezüglich des Beins frei beweglich ist, deren oberes Ende dazu bestimmt ist, mit der mechanischen Steuerungsvorrichtung (8; 9, 10, 11, 12) zusammenzuwirken, und deren unteres Ende dazu bestimmt ist, in Anlage mit einem Sitz für die Kugel des Tragkugelsystems, mit einer Kappe des omnidirektionalen Rades des Systems mit omnidirektionalem Rad oder auch mit dem Rollensystem zusammenzuwirken,
und zwar derart, dass die Betätigung des Hebels (14) in Richtung der Sohle (13) die Betätigung der Steuerstange (18) nach unten hervorruft, und somit die Verlagerung der Kugel, des omnidirektionalen Rades oder der Rollen aus der die Arbeitsposition (Pt) darstellenden zweiten Position in die die Rollposition (Pr) darstellende erste Position bis zur Arretierung in dieser Position.

2. Möbelstück nach Anspruch 1, wobei die Rollelemente die Systeme mit omnidirektionalem Rad sind.

3. Möbelstück nach Anspruch 1, wobei die Rollelemente die Rollensysteme sind.

4. Möbelstück nach Anspruch 3, wobei die Rollen wenigstens im Bereich der Rollfläche aus Teflon bestehen.

5. Möbelstück nach Anspruch 1, wobei die Rollelemente die Tragkugelsysteme sind.

6. Möbelstück nach einem der Ansprüche 1 bis 5, wobei das Steuerungssystem für jedes rohrförmige Bein (3, 4, 5, 6) die mechanische Steuerungsvorrichtung (9, 10, 11, 12) vom Typ eines Schubstangenspanners umfasst, wobei sich die Schubstange (17) der mechanischen Vorrichtung in der Achse der Steuerstange (18) befindet und für einen Anlageeingriff mit dem oberen Ende der Steuerstange (18) bestimmt ist.

7. Möbelstück nach einem der Ansprüche 1 bis 6, wobei zwischen dem oberen Ende der Steuerstange (18) und der Schubstange (17) der Steuerungsvorrichtung eine Druckfeder (19) mit einer solchen Steifigkeit vorgesehen ist, dass die Feder in der eingezogenen Position der Kugel oder, alternativ dazu, des omnidirektionalen Rades oder auch des Rollensystems die Übertragung einer Kraft von der Kugel (72) des Tragkugelsystems oder auch von dem omnidirektionalen Rad des Systems mit omnidirektionalem Rad oder auch dem Rollensystem, das sich leicht auf dem Boden abstützt und in dem rohrförmigen Bein (3, 4, 5, 6) aufgenommen ist, über die Steuerstange (18) und die Schubstange (17) ermöglicht, und derart, dass der Hebel (14) der mechanischen Steuerungsvorrichtung in einer vollständig von der Sohle (13) entfernten Position gehalten wird.

8. Möbelstück nach einem der Ansprüche 1 bis 7, wobei das Steuerungssystem eine einzige mechanische Steuerungsvorrichtung (8) vom Typ eines Schubstangenspanners für ein Paar von rohrförmigen Beinen umfasst, wobei die Schubstange ein Keilsystem (20) betätigt, das mit den Enden der zwei dem Paar von Beinen zugeordneten Steuerstangen (18) zusammenwirkt.

9. Möbelstück nach einem der Ansprüche 1 bis 8, welches eine Zwischenhülse aus Elastomer zwischen der Steuerstange (18) und den Innenwänden jedes rohrförmigen Beins (3, 4, 5, 6) aufweist.

10. Möbelstück nach einem der Ansprüche 1 bis 9, wobei der Körper (2) eine Platte ist.

11. Möbelstück nach einem der Ansprüche 1 bis 10, wobei die rohrförmigen Beine (3, 4, 5, 6) ein System zur Einstellung der Höhe umfassen, wobei jedes Bein einen ersten Teil (30, 40, 50, 60), der mit dem Körper (2) fest verbunden ist, und einen zweiten Teil (31, 41, 51, 61) mit einer bezüglich des ersten Teils verstellbaren Position umfasst.

12. Verwendung des Möbelstücks nach einem der Ansprüche 1 bis 11, wie angegeben.

## Claims

1. Furniture (1) comprising a body (2) supported by feet (3, 4, 5, 6) intended to be supported on the ground, as well as a retractable rolling system comprising rolling elements (7) capable of taking a first position (Pr), called rolling position, taking up the load of the furniture and enabling to roll the furniture on the ground, towards a second position (Pt), called working position, wherein the rolling elements are retracted above the surfaces of the feet supported on the ground, wherein the feet (3, 4, 5, 6) are tubular and in that the rolling elements (7) are:
- supporting ball systems, capable of each being moved from said second working position (Pt) wherein each of the supporting ball systems is received in the inner volume of one of the tubular feet, towards the first rolling position (Pr) wherein the ball (72) of said supporting ball system protrudes below the supporting surface of the foot through the lower orifice thereof, or alternatively,
- omnidirectional wheel systems, said omnidirectional wheel (75) comprising an axle (76), rotating along a main axis of rotation (Am) of the wheel, as well as a plurality of rollers (77), distributed over the circumference of the axle around said main axis of rotation, said rollers (77) being mounted rotating with respect to the axle (76) along the secondary axes of rotation, preferably axes respectively perpendicular to the main axis of rotation, the omnidirectional wheel systems being capable of each being moved from said second working position (Pt) wherein each of the omnidirectional wheel systems is received in the inner volume of one of the tubular feet, towards the first rolling position (Pr) wherein the omnidirectional wheel of said omnidirectional wheel system protrudes below the supporting surface of the foot through the lower orifice thereof, or alternatively
- roller systems (78), comprising two pairs of rollers (79, 80), arranged at the same level on a plate, the axes of the rollers being coplanar such that the rollers of the two pairs (79, 80) simultaneously contact the ground in the rolling position (Pr) of said rolling element (7), the two rollers of each pair (79, 80) being parallel axes, the axes of the rollers between the two pairs being perpendicular and so as to enable a movement along two perpendicular directions, said furniture comprising at least one control system enabling the passage of the rolling elements from the first rolling position (Pr) to said second working position (Pt), and vice versa, **characterised in that** the control system comprises:
- at least one mechanical control device (8; 9, 10, 11, 12) of the toggle clamp type, comprising a pad (13) around which is articulated a lever (14) forming a first small connecting rod (15), a second small connecting rod (16) being articulated at one of the ends thereof of the first small connecting rod (15), and at the other end thereof of said thrust rod (17), mounted sliding through a bore of said pad (13),
- a control rod (18), inside each tubular foot (3, 4, 5, 6), free to move axially to the foot, of which the upper end is intended to cooperate with said mechanical control device (8; 9, 10, 11, 12) and of which the lower end is intended to cooperate in support with a seat for the ball of the supporting ball system, with a tread of the omnidirectional wheel of the omnidirectional wheel system, or again with the roller system,
and such that the actuation of the lever (14) in the direction of the pad (13) causes the actuation of the control rod (18) towards the bottom, and thus the movement of the ball, of the omnidirectional wheel, or of the rollers from the second working position (Pt) to the first rolling position (Pr), until being locked in position.

2. Furniture according to claim 1, wherein the rolling elements are said omnidirectional wheel systems.

3. Furniture according to claim 1, wherein the rolling elements are said roller systems.

4. Furniture according to claim 3, wherein the rollers are made of Teflon, at least at the level of the rolling surface.

5. Furniture according to claim 1, wherein the rolling elements are said supporting ball systems.

6. Furniture according to one of claims 1 to 5, wherein the control system comprises, for each tubular foot (3, 4, 5, 6), said mechanical control device (9, 10, 11, 12) of the toggle clamp type, said thrust rod (17) of the mechanical device being situated in the axis of said control rod (18), intended to engage in support with the upper end of said control rod (18).

7. Furniture according to one of claims 1 to 6, wherein a compression spring (19) is provided between the upper end of the control rod (18) and the thrust rod (17) of the control device, of rigidity such as the spring enables, in said retracted position of the ball or alternatively, of the omnidirectional wheel, or again, of the roller system, the transmission of a force, from the ball (72) of said supporting ball system or again from the omnidirectional wheel of the omnidirectional wheel system, or again from the roller system with little support on the ground, housed in the tubular foot (3, 4, 5, 6), by way of the control rod (18) and said thrust rod (17) and so as to hold the lever (14) of the mechanical control device, in a position, completely remote from the pad (13).

8. Furniture according to one of claims 1 to 7, wherein the control system comprises one single mechanical control device (8) of the toggle clamp type for a pair of tubular feet, said thrust rod actuating a corner system (20) cooperating with the ends of the two control rods (18) associated with said pair of feet.

9. Furniture according to one of claims 1 to 8, having an inserted elastomer sleeve between the control rod (18) and the lower walls of each tubular foot (3, 4, 5, 6).

10. Furniture according to one of claims 1 to 9, wherein the body (2) is a plate.

11. Furniture according to one of claims 1 to 10, wherein the tubular feet (3, 4, 5, 6) comprise a height-adjustment system, each foot comprising a first part (30, 40, 50, 60), rigidly connected to the body (2) and a second part (31, 41, 51, 61), of position, adjustable with respect to said first part.

12. Use of the furniture according to one of claims 1 to 11 as a workbench.
